Europäisches Patentamt

(19) European Patent Office

Office européen des brevets

(11) Numéro de publication: **0 011 519**
**B1**

(12) **FASCICULE DE BREVET EUROPEEN**

(45) Date de publication du fascicule du brevet: **28.07.82**

(21) Numéro de dépôt: **79400701.3**

(22) Date de dépôt: **03.10.79**

(51) Int. Cl.³: **C 03 C 17/32,**
**C 03 C 17/34, B 65 D 23/08**

54 Procédé de revêtement d'objets en verre ou en céramique et bouteille ainsi revêtue.

(30) Priorité: **18.10.78 FR 7829646**

(43) Date de publication de la demande:
**28.05.80 Bulletin 80/11**

(45) Mention de la délivrance du brevet:
**28.07.82 Bulletin 82/30**

(84) Etats contractants désignés:
**AT BE CH DE GB IT LU NL SE**

56 Documents cités:
**FR - A - 2 293 989**
**FR - A - 2 361 311**
**US - A - 3 507 680**
**US - A - 3 876 410**

(73) Titulaire: **SOCIETE FRANCAISE DUCO Société anonyme**
**43, rue Victor Renelle**
**F-93240 Stains (FR)**

(73) Titulaire: **SOCIETE GENERALE POUR L'EMBALLAGE Société anonyme:**
**7 rue Eugène Flachat**
**F-75849 Paris Cedex 17 (FR)**

(72) Inventeur: **Vanspeybroeck, Henri**
**37 Rue Frefnoy**
**F-60134 Villiers St Sépulcre (FR)**
Inventeur: **Mosse, Michel**
**20 Rue des Bleuets**
**F-91440 Bures-sur-Yvette (FR)**

(74) Mandataire: **Möncheny, Michel et al,**
**c/o Cabinet Lavoix 2 Place d'Estienne d'Orves**
**F-75441 Paris Cedex 09 (FR)**

Courier Press, Leamington Spa, England.

**0011519**

## Procédé de revêtement d'objets en verre ou en céramique et bouteille ainsi revêtue

La présente invention est relative au revêtement d'objets en verre ou en céramique et plus particulièrement au revêtement de bouteilles de verre.

Un tel revêtement présente un grand intérêt pratique. Il permet en effet de renforcer les caractéristiques physiques du verre et autorise ainsi une diminution de son épaisseur.

Ce revêtement doit, en outre, présenter une bonne adhérence au verre pour permettre la réutilisation des bouteilles après lavage.

A cet effet, on a déjà proposé dans la demande de brevet FR 2 293 989 d'appliquer un apprêt de silane, puis une couche d'une matière filmogène réticulable contenant un agent d'étalement ou de tension tel que le Modaflow (polyacrylate d'éthyl-hexyle), puis de réticuler la couche de matière filmogène.

Un procédé du même type a été décrit dans la demande de brevet FR 2 303 724. Dans ce brevet, on a proposé d'utiliser comme agents d'étalement, outre le Modaflow, divers dérivés, et notamment des acétates et des résines de silicone solides.

Ces revêtements ne s'avèrent pas, en fait, totalement satisfaisants. Ils donnent, en effet, soit une certaine opalescence, soit une tension de la couche de matière filmogène très insuffisante (présence de "peau d'orange") ou encore ils donnent un aspect bosselé ou parsemé de cratères.

La demande de brevet FR 2 361 311 décrit, par ailleurs, un procédé puor revêtir des objets en verre, dans lequel on applique deux couches de matière filmogène, à savoir une couche d'une matière thermoplastique et une couche d'une matière thermodurcissable.

A ces couches de revêtement, on peut ajouter diverses substances, telles que des polyacrylates, des huiles de silicones ou des phosphates organiques, pour rendre lisse le revêtement.

Par ailleurs, ces revêtements n'ont jusqu'à présent été appliqués que sur des bouteilles non revêtues. Or, les fabricants de bouteilles appliquent actuellement, après la recuisson de celles-ci, des agents de traitement de surface, destinés à protéger la surface externe des bouteilles contre les rayures lors de leur manipulation.

Ainsi, le brevet US 3 876 410 décrit un procédé pour appliquer un revêtement lubrifiant sur des bouteilles en verre constitué par du polyéthylène éventuellement en mélange avec de l'eau et du monostéarate de polyoxyéthylène servant d'agent de dispersion, ou des acides gras insaturés ou leurs dérivés, tels que l'acide oléique et le monostéarate de polyoxyéthylène.

Il peut apparaître alors des incompatibilités entre l'agent de traitement de surface et le revêtement de matière filmogène.

La présente invention vise à remédier à ces divers inconvénients et à fournir sur des objets en verre préalablement revêtus d'un agent de traitement de surface un revêtement présentant un bel aspect, notamment une transparence élevée, possédant une bonne adhérence et dépourvu de cratères ou de bulles.

A cet effet, la présente invention a pour objet un procédé de revêtement d'objets en verre ou en céramique, notamment de bouteilles de verre, préalablement revêtues d'un agent de traitement de surface, du type consistant à appliquer sur les objets un apprêt de silane, puis une couche d'une matière filmogène réticulable comprenant un agent d'étalement, puis à réticuler cette couche de matière filmogène, ce procédé étant caractérisé en ce que l'agent d'étalement est choisi parmi les esters fluoroalkylés non ioniques, les dérivés d'acides gras époxydés, les huiles de silicone et leurs mélanges et l'agent de traitement de surface et choisi parmi l'acide oléique et les monostéarates de polyoxyéthylène.

L'utilisation de tels agents d'étalement confère au revêtement des propriétés particulièrement remarquables qui ne peuvent être obtenues avec les agents d'étalement classiques utilisés jusqu'à présent, notamment du type polyacrylate.

Ces agents d'étalement peuvent être utilisés à raison d'environ 0,1 à 5% en poids par rapport au poids de matière filmogène.

Comme matière filmogène réticulable, on peut utiliser les matières filmogènes utilisées habituellement dans ce domaine et notamment des résines époxy, des résines époxy-polyesters, des résines de polyuréthanne et des résines acryliques. Ces résines sont constituées de manière connue d'un polymère réticulable et d'un agent de réticulation ou de durcissement.

On trouvera une description de ces résines notamment dans les brevets déjà cités, ainsi que dans la demande de brevet FR 2 360 523.

Par ailleurs, l'utilisation comme agent de traitement de surface de l'acide oléique ou d'un monostéarate de polyoxyéthylène ayant notamment de 8 à 40 groupes éthoxy par molécule permet d'améliorer très nettement la qualité du revêtement.

Selon une autre caractéristique de la présente invention, l'adhérence du revêtement est très nettement améliorée si on utilise comme silane un silane choisi parmi le gammaglycidoxypropyl-triméthoxysilane, le vinyltriacétoxysilane et le gammaaminopropyltriéthoxysilane. Ces silanes peuvent être appliqués de manière classique sous forme de solutions aqueuses (en général à 2 ou 3% en poids.

De plus, selon une autre caractéristique de la présente invention, le silane peut être appliqué

**0011519**

simultanement avec l'agent de traitement de surface. Une telle façon de procéder permet d'éviter un poste d'enduction et, donc, permet de simplifier l'installation nécessaire à la mise en oeuvre du procédé.

La mise en oeuvre du procédé de l'invention peut être réalisée de la façon suivante:

L'apprêt de silane est appliqué en solution aqueuse, soit à froid sur des bouteilles ayant déjà reçu un agent de traitement de suarface, soit à froid ou à température peu élevée (<150°C) sur des bouteilles non traitées en surface. Dans ce dernier cas, le silane est ajouté à la solution à l'agent de traitement de surface.

L'apprêt de silane ou le mélange de l'agent de traitement de surface et du silane est appliqué par tout moyen classique et avantageusement par pistoletage pneumatique, les moyens de protection de la bague et de l'intérieur des bouteilles pouvant être ceux qui sont décrits dans la demande de brevet FR 2 360 523. Les bouteilles sont ensuite soumises à un traitement thermique en vue d'éliminer la phase aqueuse et d'atteindre une température suffisante pour l'application de la couche de matière filmogène. Ce traitement thermique peut être réalisé par tout moyen conventionnel.

On peut notamment réaliser ce traitement immédiatement après dépôt de la couche de silane en utilisant des rayonnements infrarouge de longueur d'onde spécialement adaptée au chauffage du verre, ainsi que cela est décrit dans la demande de brevet FR 2 315 323. Un tel type de chauffage permet d'obtenir rapidement et de façon compatible avec une production à cadence élevée, la réserve thermique utile à l'application et à réticulation de la couche de matière filmogène. On peut également réaliser le chauffage par convection.

La couche de matière filmogène est déposée de préférence sous forme de poudre fine par trempage en bain fluidisé, électrostatique ou non, ou par pistoletage électrostatique. Cette couche superficielle est ensuite réticulée par un traitement thermique approprié qui peut être réalisé au moyen de tout procédé classique: chauffage par convecteur d'air chaud, par I.R., à gaz ou électrique, par microondes. Les objets en verre sont ensuite refroidis de façon naturelle ou accélérée au moyen d'air ou d'un liquide par pulvérisation ou trempage.

D'autres caractéristiques et avantages de l'invention apparaîtront au cours de la description qui va suivre d'exemples de réalisation du procédé de l'invention, donnés uniquement à titre d'illustration.

Exemple 1

On revêt des bouteilles à bière de type Handy BSH de contenance 34,5 cl, préalablement traitées en surface avec l'acidé oléique en phase vapeur avec une solution aqueuse à 3% en poids de gammaglycidoxypropyl triméthoxysilane, le pH de la solution ayant été amené à la valeur 4, au moyen d'un acide faible; la quantité de solution déposée est d'environ 0,5 ml par bouteille. Ces bouteilles sont ensuite introduites dans un four à chauffage infrarouge où elles sont portées en 2 minutes environ à une température de peau externe de 210°C environ. Les bouteilles préchauffées sont ensuite revêtues (sur une épaisseur de 80 microns environ) avec la couche de matière filmogène en poudre préparée en mélangeant et en broyant les constituants suivants:

| | |
|---|---|
| —résine époxy obtenue à partir d'épichlorhydrine et de bisphénol A, PM 1400; indice d'époxy 900; température de fusion 95°C | 100 parties |
| —2 phényl-imidazoline | 6,5 „ |
| —Ester fluoroalkylé non ionique (commercialisé sous le nom de Fluorad FC 430 par la Société 3M FRANCE) à titre d'agent d'étalement | 0,5 „ |

La poudre est préparée en mélangeant et dispersant les ingrédients ci-dessus dans une extrudeuse Komalaxeur PR 100 de la Société Buss, à 100°C, après quoi le mélange est refroidi et broyé jusqu'à une taille de particules comprise entre 5 et 80 microns.

Les bouteilles sont ensuite introduites dans un four à rayonnement infrarouge de courte longueur d'onde afin d'obtenir la réticulation de la poudre. La durée de traitement est de 4 minutes à 180°C. Les bouteilles sont ensuite refroidies naturellement.

Les bouteilles ainsi préparées ont un aspect transparent, brillant, et conservent leur teinte d'origine. Leur toucher est lisse et dur.

En vue d'apprécier les qualités des bouteilles revêtues par le procédé de l'invention, on les soumet au test d'aptitude au recyclage.

Test d'aptitude au recyclage:

Les bouteilles sont immergées, pleines d'eau et bouchées, dans une solution d'hydroxyde de sodium à 3,5% pendant 60 minutes à 70°C, puis rincées à l'eau courante pendant quelques minutes, et placées, en restant pleines et bouchées, sur le simulateur d'abusage Line Simulator ACR pendant 5 minutes sous aspersion d'eau. Les bouteilles sont ensuite placées pendant 45 minutes sur un convoyeur linéaire sur lequel elles sont immobilisées, le convoyeur se déplaçant à la vitesse de 40 m/mn. Les bouteilles sont ensuite examinées: on ne note aucun défaut (arrachement, décollement, etc.). L'essai ci-dessus est recommencé 15 fois, et le comportement du revêtement plastique reste très satisfaisant, puisqu'il n'apparaît aucun défaut d'adhésion ni arrachement.

3

### Exemple 2

On revêt des bouteilles dans les mêmes conditions qu'à l'exemple 1, mais on utilise du vinyltriacétoxysilane comme silane d'adhérence. Le comportement des bouteilles est analogue à celui qui est décrit dans l'exemple 1.

### Exemple 3

On revêt des bouteilles dans les mêmes conditions qu'à l'exemple 1, mais on utilise des bouteilles ayant subi, après la recuisson, un traitement de surface avec un monostéarate de polyoxyéthylène comportant environ 24 groupes éthoxy par molécule. Les résultats sont identiques à ceux de l'exemple 1.

### Exemple 4

On revêt des bouteilles dans les mêmes conditions qu'à l'exemple 1, mais l'agent de traitement de surface (identique à celui utilisé à l'exemple 3) est déposé simultanément avec le silane d'adhérence (gammaglycidoxypropyl triméthoxysilane), les concentrations respectives dans la solution aqueuse étant de 3 et 0,3% (en poids), et le pH de la solution étant compris entre 4 et 5; d'autre part, la solution ci-dessus est déposée sur des bouteilles dont la température est comprise entre 70 et 130°C. Le comportement des bouteilles au test d'abusage simultané est comparable à celui décrit dans l'exemple 1.

### Exemple 5

On revêt les bouteilles en opérant comme à l'exemple 1, mais en utilisant l'agent d'étalement indiqué dans le tableau I ci-après, à la concentration indiquée dans ce tableau.

Note: l'huile de soja époxydée (Ecepox BP 1) a les caractéristiques suivantes:

| | | |
|---|---|---|
| —taux d'oxygène oxiranes | : | 3,8% en poids |
| —indice d'iode | : | 2,6% (g d'iode absorbé par 100 g de produit) |
| —acidité | : | 0,61 (mg de KOH/g) |
| —indice de réfraction à 20°C | . | 1,473 |
| —densité à 22°C | : | 0,996 |

4

TABLEAU I

| Nature chimique | Réf. commerciale | Fabricant | Concentration % en poids/ résine époxy | Résultats obtenus : aspect du revêtement | |
|---|---|---|---|---|---|
| | | | | Transparence | Tension du film |
| Ester fluoroalkylé non ionique | Fluorad FC 430 ou FC 431 | 3M FRANCE | 0,2 | Excellente " | Bonne " |
| Huile de silicone (méthylphényl polysiloxane) | Rhodorsil 640 V 100 | RHONE POULENC INDUSTRIES | 0,2 | Légère opalescence | Assez bonne |
| Résine de silicone solide | BYCK 300 | BYCK MALLINCKRODT | 0,5 | Très bonne | Médiocre |
| Polyacrylate d'éthyl-hexyle | Modaflow | MONSANTO | 0,5 | Opalescence | Bonne |
| Butyral polyvinylique | B 30 H | HOECHST | 1 | Opalescence | Bonne |
| Huile de soja époxydée | Ecepox BP 1 | PCUK | 3 | Excellente | Très bonne |
| Ester fluoroalkylé Huile soja époxydée Huile de silicone | Fluorad FC 430 Exepox BP 1 640 V 100 | | 0,2 3 0,1 | Très bonne | Bonne |

Il apparaît à la lecture de ce tableau que l'utilisation des agents d'étalement selon l'invention donne des revêtements présentant un bien meilleur aspect que ceux obtenus avec les agents utilisés selon la technique antérieure (Modaflow, acétals, résine de silicone solide).

## Exemple 6

On revêt des bouteilles en opérant comme à l'exemple 4 en utilisant une solution aqueuse à 1% de monostéarate de polyoxyéthylène comportant environ 24 groupes éthoxy par molécule mélangé à 2% de gammaglycidoxy propyl triméthoxysilane et une résine époxy-polyester en poudre ayant la composition suivante:

| | |
|---|---|
| —Résine de polyester saturée en poudre (66 parties d'acide téréphtalique, 34 parties de néopentylglycol) Indice d'acide 50 Indice d'hydroxyle 10 | 50 parties en poids |
| —Résine époxyde résultant de la condensation de l'épichlorhydrine sur le bisphénol A, poids moléculaire 1400 | 50 parties en poids |

A ces deux résines sont ajoutés un ou deux agents d'étalement dont la composition et le dosage sont indiqués dans le tableau II ci-après.

Les produits ci-dessus sont mélangés et dispersés dans un extrudeur type Komalaxeur PR 46 de chez Buss, à une température de l'ordre de 100°C. Le mélange est ensuite refroidi, puis réduit en poudre jusqu'à une granulométrie comprise entre 5 et 80 microns.

Cette poudre est appliquée par voie électrostatique sur des bouteilles préchauffées.

Les résultats obtenus sont donnés au tableau II.

## Exemple 7

On opère comme à l'exemple 6, mais en utilisant une poudre de polyuréthanne ayant la composition suivante:

| | |
|---|---|
| —Isocyanate masqué (isophorone diisocyanate + diéthylèneglycol + caprolactame) | 25 parties en poids |
| —Résine de polyester saturée en poudre (31 parties d'acide téréphtalique + 60 parties 1,1 isopropylidène bis (phénylène) diéthanol + 9 parties de néopentylglycol Indice d'acide 1,6 Indice d'hydroxyle 62 | 75 parties en poids |
| —Isocarboxylate d'étain (accélérateur) | 0,2 parties en poids |

A ces différents éléments sont ajoutés un ou des agents d'étalement dont la composition et le dosage sont indiqués dans le tableau III ci-après.

Les produits ci-dessus sont mélangés et dispersés dans un extrudeur type Komalaxeur PR 246 de chez Buss, à une température de l'ordre de 100°C.

Le mélange est ensuite refroidi, puis réduit jusqu'à une granulométrie comprise entre 5 et 80 microns. Cette poudre est appliquée par voie électrostatique sur des bouteilles préchauffées.

Les résultats obtenus sont donnés au tableau III.

TABLEAU II

| Nature chimique | Réf. commerciale | Fabricant | Concentration % en poids/ résine époxy-polyester | Résultats obtenus : Aspect du revêtement | |
|---|---|---|---|---|---|
| | | | | Transparence | Tension du film |
| Ester fluoroalkylé non ionique | Fluorad FC 430 ou FC431 | 3M FRANCE | 0,2 | Excellente ,, | Bonne ,, |
| Huile de silicone (méthylphényl) polysiloxane) | Rhodorsil 640 V 100 | RHONE POULENC INDUSTRIES | 0,2 | Bonne | Assez bonne |
| Résine de silicone | BYCK 300 | BYCK MALLINCKRODT | 0,5 | Très bonne | Médiocre |
| Polyacrylate d'éthyl-hexyle | Modaflow | MONSANTO | 0,5 | Opalescence | Bonne |
| Butyral polyvinylique | B 30 H | HOECHST | 1 | Opalescence | Bonne |
| Huile de soja époxydée | Ecepox BP 1 | PCUK | 3 | Excellente | Très bonne |
| Ester fluoroalkylé Huile soja époxydée Huile de silicone | Fluorad FC 430 Ecepox BP 1 640 V 100 | | 0,2 3 0,1 | Très bonne | Bonne |

TABLEAU III

| Nature chimique | Réf. commerciale | Fabricant | Concentration % en poids/ résine polyuréthane | Résultats obtenus : aspect du revêtement | |
|---|---|---|---|---|---|
| | | | | Transparence | Tension du film |
| Ester fluoroalkylé non ionique | Fluorad FC 430 ou FC 431 | 3M FRANCE | 0,2 | Excellente | Bonne |
| Huile de silicone (méthylphényl polysiloxane) | Rhodorsil 640 V 100 | RHONE POULENC INDUSTRIES | 0,2 | Bonne | Assez bonne |
| Polyacrylate d'éthyl-héxyle | Modaflow | MONSANTO | 0,5 | Opalescence | Bonne |
| Butyral polyvinylique | B 30 H | HOECHST | 1 | Opalescence | Bonne |
| Huile de soja époxydée | Ecepox BP 1 | PCUK | 3 | Excellente | Bonne |
| Ester fluoroalkylé Huile soja époxydée Huile de silicone | Fluorad FC 430 Ecepox BP 1 640 V 100 | | 0,2 3 0,1 | Excellente | Très bonne |

# 0011519

**Revendications**

1. Procédé pour obtenir un revêtement transparent, adhérent et lisse sur des objets en verre ou en céramique, notamment sur des bouteilles de verre, préalablement revêtus d'un agent de traitement de surface du type consistant à appliquer sur les objets un apprêt de silane, puis une couche d'une matière filmogène réticulable comprenant un agent d'étalement, puis à réticuler cette couche de matière filmogène, ce procédé étant caractérisé en ce que l'agent d'étalement est choisi parmi les esters fluoroalkylés non ioniques, les dérivés d'acides gras époxydés, les huiles de silicone et leurs mélanges et l'agent de traitement de surface est choisi parmi l'acide oléique et les monostéarates de polyoxyéthylène.

2. Procédé selon la revendication 1, caractérisé en ce que le silane est choisi parmi le gamma-glicydoxy propyl triméthoxysilane, le vinyltriacétoxysilane et le gammaaminopropyl triéthoxysilane.

3. Procédé selon l'une quelconque des revendications 1 et 2, caractérisé en ce que le silane est appliqué simultanément avec l'agent de traitement de surface.

4. Bouteille réutilisable possédant un revêtement obtenu par un procédé selon l'une quelconque des revendications 1 à 3.


**Claims**

1. Process for obtaining a transparent, adherent and smooth coating on glass or ceramic articles, typically glass bottles, precoated with surface treating agent, of the type comprising applying on the articles a first or basic layer of a silane, and then a layer of a crosslinkable film-forming material comprising a levelling agent, and then crosslinking said layer of film-forming material, this process being characterized in that the levelling agent is selected from nonionic fluoroalkyl esters, epoxydized fatty acids derivatives, silicone oils and mixtures thereof and the surface treating agent is selected from oleic acid and polyoxyethylene monostearates.

2. Process as claimed in claim 1, characterized in that the silane is selected from gamma-glicydoxy propyl trimethoxy silane, vinyltriacetoxysilane and gammaaminopropyl triethoxysilane.

3. Process as claimed in any one of claims 1 and 2, characterized in that the silane is applied simultaneously with the surface treating agent.

4. Bottle which can be reused having a coating which has been obtained by a process as claimed in any one of claims 1 to 3.


**Patentansprüche**

1. Verfahren zur Erlangung eines transparenten, haftenden und glatten Überzugs auf Gegenständen aus Glas oder aus Keramik, insbesondere auf Glasflaschen, die zuvor mit einem Oberflächenbehandlungsmittel überzogen worden sind, wobei auf die Gegenstände eine Silanappretur, dann eine Schicht aus einem filmbildenden, vernetzbaren, ein Verlaufmittel aufweisenden Material aufgebracht, dann diese Schicht aus filmbildendem Material vernetzt wird, dadurch gekennzeichnet, daß das Verlaufmittel unter den nicht-ionischen Fluoralkylestern, den epoxidierten Fettsäurederivaten, den Siliconölen und ihren Gemischen und das Oberflächenbehandlungsmittel unter Oleinsäure und Polyoxyäthylenmonostearaten ausgewählt wird.

2. Verfahren nach Anspruch 1, dadurch gekennzeichnet, daß das Silan unter $\gamma$-Glycidoxypropyltrimethoxysilan, Vinyltriacetoxysilan und $\gamma$-Aminopropyltriäthoxysilan ausgewählt wird.

3. Verfahren nach einem der Ansprüche 1 und 2, dadurch gekennzeichnet, daß das Silan gleichzeitig mit dem Oberflächenbehandlungsmittel aufgebracht wird.

4. Wiederverwendbare Flasche mit einem Überzug, erhalten nach einem Verfahren gemäß einem der Ansprüche 1 bis 3.